Europäisches Patentamt

European Patent Office

Office européen des brevets

(11) Publication number: **0 118 657 B1**

# EUROPEAN PATENT SPECIFICATION

(45) Date of publication of patent specification: **18.12.91**  (51) Int. Cl.⁵: **H01M 6/14**, H01M 4/96, H01M 4/40

(21) Application number: **84100066.4**

(22) Date of filing: **04.01.84**

The file contains technical information submitted after the application was filed and not included in this specification

(54) **Non-aqueous electrochemical cell.**

(30) Priority: **14.01.83 JP 4537/83**
**14.01.83 JP 4538/83**
**17.03.83 JP 45123/83**
**19.07.83 JP 130154/83**
**19.07.83 JP 130155/83**
**22.09.83 JP 146968/83 U**
**22.09.83 JP 146969/83 U**

(43) Date of publication of application:
**19.09.84 Bulletin 84/38**

(45) Publication of the grant of the patent:
**18.12.91 Bulletin 91/51**

(84) Designated Contracting States:
**DE FR GB**

(56) References cited:
**EP-A- 51 440          EP-A- 64 816**
**EP-A- 72 536          EP-A- 74 450**
**EP-A- 84 381          US-A- 4 028 138**
**US-A- 4 042 756       US-A- 4 093 784**
**US-A- 4 233 372**

**J. Electrochem. Soc. 162 (12) 1979**

(73) Proprietor: **KABUSHIKI KAISHA TOSHIBA**
72, Horikawa-cho Saiwai-ku
Kawasaki-shi Kanagawa-ken(JP)

Proprietor: **TOSHIBA BATTERY CO., LTD.**
4-10, Minamishinagawa 3-chome Shinagawa-ku
Tokyo, 104(JP)

(72) Inventor: **Yamada, Shuji**
B-108, Kyoya-Shimoda-Heights 916-2, Shimoda-cho
Kohoku-ku Yokohama-shi(JP)
Inventor: **Ohsaki, Takahisa**
7-403, Mutsuuradai-Danchi 1397 Mutsuura-cho
Kanazawa-ku Yokohama-shi(JP)
Inventor: **Mitsuyasu, Kyoshi**
2-815 Aobadai-Danchi, 1-9, Aobadai
Midori-ku Yokohama-shi(JP)
Inventor: **Sato, Yuichi**
4-18-13, Tobio
Atsugi-shi Kanagawa-ken(JP)

Inventor: **Aoki, Yoshiyasu**
**705 Neo-Corpo-Oojima 7-30-26, Oojima**
**Koto-ku Tokyo(JP)**
Inventor: **Hiratsuka, Kazuya**
**3-16-13, Oomorihigashi**
**Oota-ku Tokyo(JP)**
Inventor: **Tsukada, Masazumi**
**c/o Kikuchi 1-55, Nakasaiwai-cho**
**Saiwai-Ku Kawasaki-shi(JP)**
Inventor: **Minagawa, Ikuzo**
**c/o Yamaguchi 1138, Nishiya-cho**
**Hodogaya-ku Yokohama-shi(JP)**


⁷⁴ Representative: **Henkel, Feiler, Hänzel & Part-**
**ner**
**Möhlstrasse 37**
**W-8000 München 80(DE)**

## Description

The present invention relates to an improvement in a non-aqueous electrochemical cell.

A non-aqueous electrochemical cell using lithium or sodium as an active anode material has high energy density, good storage characteristics, and wide operation temperature range. A non-aqueous electrochemical cell is therefore often used as a power source for a calculator, a watch, or a memory backup system. Such a cell comprises an anode, an electrolyte and a cathode. In general, such a cell uses as an anode an alkali metal such as lithium or sodium; as an electrolyte or electrolytic solution, a solution of a solute such as lithium perchlorate or lithium tetrafluoroborate in a non-aqueous solvent such as propylene carbonate, $\gamma$-butyrolactone, or dimethoxyethane; and as a cathode, manganese dioxide or poly-carbonmonofluoride.

Among such cells, a cell using thionyl chloride as a main active cathode material is receiving a lot of attention due to its high energy density. A cell of this type has a cathode consisting of a porous carbon body and a current collector and has an electrolyte, a solution of lithium chloride (LiCl) and aluminum chloride ($AlCl_3$) in thionyl chloride ($SOCl_2$). Therefore, $SOCl_2$ serves both as the main active cathode material and as the solvent for the electrolyte salt.

In a cell using $SOCl_2$ as an active cathode material, the anode reaction is the reaction in which the anode metal is dissolved in the electrolyte as metal ions. On the other hand, the cathode reaction occurs on the porous carbon body as one constituent member of the cathode, and the reaction product of the cathode reaction is deposited on the porous carbon body. However, in a conventional cell having a cathode comprising a porous carbon body which is obtained by mixing acetylene black with a polymer binder such as polytetrafluoroethylene, forming a resultant mixture into a predetermined shape, and drying the formed body upon deposition of the reaction product on the porous carbon body, the electrode reaction is significantly interfered with and the discharge capacity is lowered. Especially, the discharge efficiency is considerably lowered in a high rate discharge as compared to a low rate discharge.

The cell described above uses an oxyhalide such as thionyl chloride, which is highly corrosive, as a main active cathode material. For this reason, the cell container must be sealed so that the oxyhalide may not leak outside the container and may not corrode equipment in which the cell is mounted. The oxyhalide is in the liquid form and is highly volatile. Accordingly, from the viewpoint of the working environment for manufacturing such cells and the viewpoint of the cell characteristics, an electrolyte containing such an oxyhalide must be injected and held in a cell container after cell constituent elements (anode, separator, and cathode) are placed inside the container.

In view of the foregoing, a cell assembly method to be described below has been proposed. According to this method, cell constituent elements consisting of an anode, a separator and a cathode are placed in a metal can. A metal top is prepared by liquid-tightly sealing, an injection metal pipe serving as one polarity terminal through a sealing material such as a glass or a ceramic. The metal top is fitted in the open upper end of the metal can and is sealed by laser welding or the like. Then, an electrolyte containing an oxyhalide is injected into the metal can through the metal pipe. A metal needle is inserted into the metal pipe, and the pipe and the upper end of the needle are liquid-tightly sealed by laser welding or the like. However, in this method, when the upper portion of the metal pipe and the upper end of the metal needle are welded, the electrolyte attached to the inner circumferential surface of the pipe or near the lower end of the pipe is evaporated due to the heat of welding, and is introduced between the pipe and the needle in the form of gas. This gives rise to defective welding (pinholes in many cases) and a lower yield of cells.

Prior art document EP-A1-0 051 440 describes a non-bleeding gas electrode in which a backing layer containing polytetrafluoroethylene and a pore former is preprared and assembled with an active layer and a current distributor. The resulting assembly is consolidated and the active and backing layer pore formers is/are removed, wherein the active layer contains high surface area carbon particles and a pore former, the average particle size of the active layer pore former being in the range from about 1 to about 40 microns and being sufficiently large to relieve internal liquid pressure generated in the active layer during use.

Further, prior art document EP-A1-0 072 536 discloses a foamable polyolefinic resin composition for an electrically-conductive foam comprising a mixture of 70 to 95% by weight of a polyolefinic resin, 5 to 30% by weight of an electrically-conductive, hollow particulate furnace black having a specific surface area of 900 square meters or more per gram, and a blowing agent, wherein the furnace black and blowing agent are homogeneously dispersed in the polyolefinic resin.

Finally, prior art document "Journal of Electrochem. Soc.", 126(12), 1979, pages 2052 to 2056 describes Li/$SOCl_2$ cells having a cathode which uses a carbon "Vulcan XC-72R".

It is an object of the present invention to provide a non-aqueous electrochemical cell which has a high discharge capacity and an excellent discharge efficiency in a high rate discharge, and which has a cathode comprising a porous carbon body having a good size stability.

This object is achieved by a non-aqueous electrochemical cell having features as defined in claim 1.

This invention can be more fully understood from the following detailed description when taken in conjunction with the accompanying drawings, in which:

Fig. 1 is a cross-sectional view of a lithiumthionyl chloride cell according to Example 1 of the present invention;

Fig. 2 is a graph showing the relationship between the terminal voltage and discharge time in a cell of Example 1 and Comparative Example 1;

Fig. 3 is a cross-sectional view showing a lithium-thionyl chloride cell according to Example 2 of the present invention;

Fig. 4 is a graph showing the relationship between the terminal voltage and discharge time of cells of Examples 2 and 3 and Comparative Example 2;

Fig. 5 is a cross-sectional view showing a lithium-thionyl chloride cell according to Example 4 of the present invention; and

Fig. 6 is a graph showing the relationship between the discharge capacity and discharge current in a cell of Examples 4 and 5 and Comparative Example 3.

Of various types of carbon materials, a carbon black wherein a thin layer of graphite crystals is formed on the surface of each of carbon black particles has an extremely high conductivity and an extremely great specific surface area. Based on this fact, the present inventors have found that when a cathode consisting of a current collector and a porous carbon body containing such a carbon black as a main component is used, a non-aqueous electrochemical cell having excellent discharge characteristics can be obtained.

The cathode as described above can be obtained in the following manner. A polymer binder such as polytetrafluoroethylene is added to the carbon black as described above. After adding an organic solvent such as ethyl alcohol, the resultant mixture is agitated and milled well. The milled substance is applied on a current collector of a metal net, a punched metal, or an expanded metal and is dried thereafter. When the porous carbon body containing as a main component a mixture of the carbon black having a special structure as described above and acetylene black is used, a non-aqueous electrochemical cell which has high discharge capacity and high discharge efficiency in high rate discharge and which has excellent size stability is obtained.

Regarding the mixing ratio of the carbon black having a thin layer of graphite crystals on the surface of each particle and the acetylene black the carbon black is used in an amount of 20 to 80% by weight and the acetylene black is used in an amount of 80 to 20% by weight.

In a cell according to a particular aspect of the present invention, the porosity of the porous carbon body is limited to fall within a predetermined range for the following reasons. When the porosity of the porous carbon body is less than 70%, the reaction efficiency is degraded. On the other hand, when the porosity of the porous carbon body exceeds 85%, the strength of the porous carbon body is degraded. The pore size of pores of the porous carbon body is defined to fall within a predetermined range for the following reasons. When the pore size is less than 0.1 $\mu$m, the pores become clogged by the reaction product of the thionyl chloride as an active cathode material. On the other hand, when the pore size exceeds 2 $\mu$m, the reaction area of the porous carbon body is decreased, resulting in a degradation in the reaction efficiency. The ratio of the volume of pores having a pore size of 0.1 to 2 $\mu$m to the total volume of pores is limited to fall within a predetermined ratio for the following reason. When the ratio is less than 30%, the reaction efficiency cannot be increased satisfactorily.

Comparative Example 1

Comparative Examples will now be described with reference to a case of a lithium-thionyl chloride cell.

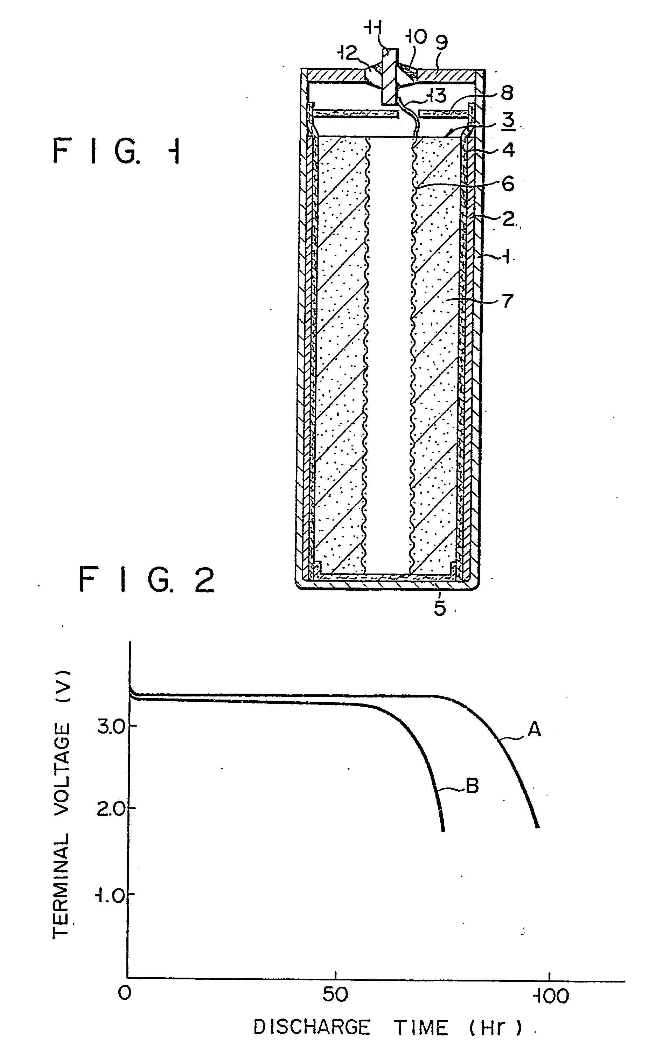

Fig. 1 shows a cross-sectional view of a cell of R03 size. Referring to Fig. 1, reference numeral 1 denotes a metal can (10 mm outer diameter, 42 mm height) of stainless steel which also serves as an anode terminal and which has an open upper end. A cylindrical anode 2 of metal lithium (0.6 mm thickness) is fitted inside the metal can 1. A cathode 3 is arranged inside a glass fiber separator 4 which is arranged inside the anode 2. An insulating sheet 5 is interposed between the bottom surfaces of the cathode 3 and the metal can 1. The cathode 3 consists of a current collector 6 of a stainless steel net and a cylindrical porous carbon body 7. The cathode 3 is prepared by mixing 90% by weight of a carbon black wherein a thin layer of graphite crystals is formed on the surface of each of carbon black particles ("Ketjenblack EC": Trade name of Lion Akzo Co., Inc.) and 10% by weight of polytetrafluoroethylene; adding ethanol to the mixture; milling the mixture; forming the milled substance into a cylindrical shape (8 mm outer diameter, 3 mm inner diameter, and 35 mm height) such that the current collector faces inward; and drying the assembly in vacuo at 150°C. Thus, the cathode 3 is obtained wherein the cylindrical porous carbon body 7 is formed around the current collector 6.

An insulating layer sheet 8 is supported by the separator 4 to be above the cathode 3 inside the can 1. A metal top 9 is sealed to the open upper end of the can 1 by laser welding or the like. A hole 10 is formed at the centre of the metal top 9. An electrolyte comprising a 1.8 mol/$\ell$ solution of lithium tetrachloroaluminate (LiA$\ell$C$\ell_4$) in thionyl chloride (SOC$\ell_2$) is injected into the metal can 1 through the hole 10. A cathode terminal 11 is fixed in the hole 10 of the metal top 9 by means of a metal-glass sealing material 12 and is electrically insulated from the metal top 9. The cathode terminal 11 is connected to the current collector 6 of the cathode 3 by a lead wire 13 mounted at the lower end of the terminal 11.

Comparative Example 2

A lithium-thionyl chloride cell of R03 size having the same structure as that of Comparative Example 1 was prepared following the same procedures as in Comparative Example 1 except that acetylene black was used as carbon black.

The cells of Comparative Examples 1 and 2 were examined for their characteristic of 300 $\Omega$ constant load discharge at room temperature. The characteristic curves as shown in Fig. 2 were obtained. Curve A in Fig. 2 is a discharge characteristic curve of the cell of Comparative Example 1 and curve B shows the same of the cell of Comparative Example 2. As may be apparent from Fig. 2, the cell (curve A) of Comparative Example 1 has significantly longer discharge time than that (cell B) of Comparative Example 2 and higher discharge voltage than that of Comparative Example 2. The cell of Comparative Example 1 is assumed to provide such good discharge characteristics for the following reason. The porous carbon body of the cathode contains as its main component a carbon black in which a thin layer of graphite crystals is formed on the surface of each particle. Therefore, the conductivity and the reaction surface area of the cathode are considerably improved.

In Comparative Example 1 above, a cylindrical cathode is used. However, for example, a milled substance of a carbon black and a polymer binder may be applied on a metal current collector to provide a belt-like electrode, and the belt-like electrode can be wound and dried to provide a spiral cathode. Example 1

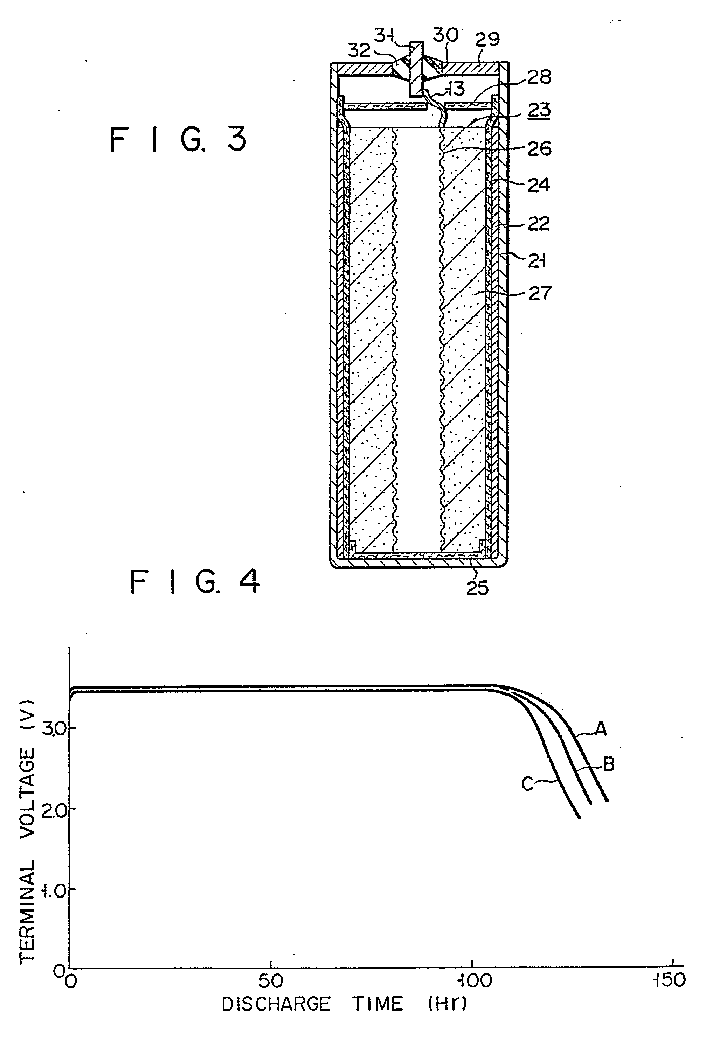

Fig. 3 shows a cross-sectional view of a cell of R6 size. Referring to Fig. 3, reference numeral 21 denotes a metal can (14 mm outer diameter, 47 mm height) of stainless steel, which also serves as an anode terminal, and which has an open upper end. A cylindrical anode 22 of metal lithium (0.75 mm thickness) is applied on the inner circumferential surface of the metal can 21. A cathode 23 is arranged inside a glass fibre separator 24. An insulating sheet 25 is interposed between the bottom surfaces of the cathode 23 and the metal can 21.

The cathode 23 is prepared by the following method. A mixture is prepared by mixing 45% by weight of a carbon black wherein a thin layer of graphite crystals is formed on the surface of each of carbon black particles ("Ketjenblack EC": Trade name, Lion Akzo Co., Inc.), 45% by weight of acetylene black, and 10% by weight of a powder of polytetrafluoroethylene; adding ethanol to the resulant mixture in a ratio of 8 m$\ell$ per gram of the mixture; and sufficiently milling the mixture. The milled substance is formed into a cylindrical shape (10 mm outer diameter, 6 mm inner diameter, and 38 mm height) together with a current collector 26 comprising a nickel net such that the current collector 26 faces inward. The formed body is dried in vacuo at 200°C to provide the cathode 23 wherein a cylindrical porous carbon body 27 is applied on the outer circumferential surface of the current collector 26.

An insulating paper sheet 28 with a hole is supported by the separator 24 to be located above the cathode 23 in the metal can 21. A metal top 29 is sealed to the open upper end of the metal can 21 by laser welding or the like. A hole 30 is formed at the centre of the metal top 29. An electrolyte comprising a 1.8 mol/$\ell$ solution of lithium tetrachloroaluminate (LiA$\ell$C$\ell_4$) in thionyl chloride (SOC$\ell_2$) is injected into the metal can 21 through the hole 30 of the metal top 29. A cathode terminal 31 is fixed in the hole 30 of the metal top 29 by means of a metal-glass sealing material 32 and is electrically insulated from the metal top 29. The lower end of the cathode terminal 31 is connected to the current collector 26 of the cathode 23 by a lead wire 13. Example 2

A lithium-thionyl chloride cell of R6 size having the same structure as that of Comparative Example 1 was assembled using the same cathode as that in Comparative Example 1 except that a mixture used consisted of 25% by weight of "Ketjenblack EC" (Lion Akzo Co., Inc.), 65% by weight of acetylene black, and 10% by weight of a powder of polytetrafluoroethylene.

Comparative Example 3

A lithium-thionyl chloride cell of R6 size having the same structure as that of Comparative Example 1 was assembled using a cathode as in Comparative Example 1 except that a mixture used consisted of 90% by weight of acetylene black and 10% by weight of a powder of polytetrafluoroethylene.

One hundred, each, of the cells of Examples 1 and 2 and Comparative Example 3 were prepared. The diameters of these cells before and after drying were measured, and the results as shown in the Table below were obtained. The Table also shows the number of cathodes which exhibited separation or peeling off of the porous carbon body from the current collector and the number of cathodes which could not be inserted into metal cans due to expansion of the porous carbon body.

Table

| | Average cathode diameter (mm) | | Number of cathodes prepared | | |
|---|---|---|---|---|---|
| | Before drying | After drying | No. of satisfactory cathodes | No. of unsatisfactory cathodes | |
| | | | | Separation of porous carbon body | Could not be inserted into metal can |
| Example 1 | 10 | 10 | 99 | 1 | 0 |
| Example 2 | 10 | 10.2 | 100 | 0 | 0 |
| Comparative Example 3 | 10 | 11 | 86 | 0 | 14 |

As may be seen from the Table above, the cathodes of the cells of Examples 1 and 2 indicate only small changes in size and are rarely susceptible to the problems of a defective porous carbon body or the impossibility of inserting the cathode into a metal can due to expansion of the porous carbon body. In contrast to this, a number of cathodes in the cells of Comparative Example 3 suffered significant variations in size after drying and could not be inserted into metal cans.

Cells of Examples 1 and 2 and Comparative Example 3 were examined for their characteristics of 300 Ω load discharge at room temperature. Fig. 4 shows the obtained characteristics. Referring to Fig. 4, curve A represents a discharge characteristic curve of the cell of Example 1, curve B represents the same of the cell of Example 2, and curve C represents the same of the cell of Comparative Example 3. As may be seen from Fig. 4, the cells of Examples 1 and 2 have longer discharge time and higher discharge voltage than those of the cell (Comparative Example 3) having a cathode comprising a porous carbon body containing acetylene black alone as a main component.

Example 3

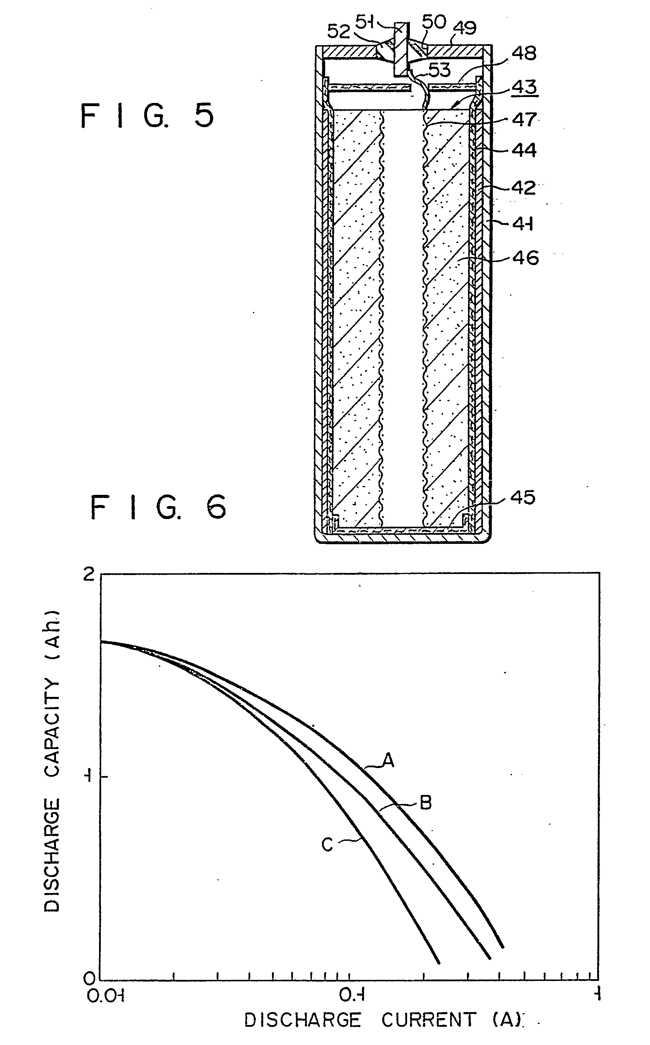

After adding polytetrafluorcethylene in an amount of 10% by weight to a mixture consisting of 45% by weight of acetylene black and 45% by weight of "Ketjenblack EC" (Lion Akzo Co., Ltd.) having an average particle size of 40 m$\mu$m and a DBP absorption of 200 cm$^3$/100g, ethanol was added to the resultant mixture and milling was performed. As shown in Fig. 5, the milled substance was formed into a cylindrical body (10.5 mm outer diameter, 5 mm inner diameter, and 38 mm height) together with a current collector 47 comprising a stainless steel net such that the current collector 47 faces inward. The cylindrical body was dried in vacuo at 150°C. Thus, a cathode 43 was obtained in which a cylindrical porous carbon body 46 was adhered to the outer circumferential surface of the current collector 47. The porous carbon body 46 of the cathode 43 had a porosity of 80%. When the pore distribution of the porous carbon body 46 was examined by the mercury injection method, 37% of the total pore volume is found to be consisted by the pores having a diameter falling within the range of 0.1 to 2 $\mu$m. Subsequently, the cathode 43 was arranged inside a separator 44 in a metal can 41 of stainless steel having an outer diameter of 14 mm and a height of 47 mm, in which a cylindrical anode 42 having a thickness of 0.7 mm and consisting of metal lithium was adhered to the inner circumferential surface thereof. After assembling an insulating paper sheet 48 and sealing the metal can 41 with a metal top 49, an electrolyte was injected into the metal can 41 through a hole 50 formed in the metal top 49. The electrolyte consisted of a 1.8 mol/$\ell$ solution of lithium tetrachloroaluminate (LiA$\ell$C$\ell_4$) in thionyl chloride (SOC$\ell_2$). A cathode 51 connected to the current collector 47 through a lead wire 53 was fixed in the hole 50 of the metal top 49 by means of a sealing material 52. A lithium-thionyl chloride cell of R6 size was thus assembled as shown in Fig. 5. In Fig. 5, reference numeral 45 denotes an insulating paper sheet interposed between the bottom surfaces of the cathode 43 and the metal can 41.

Comparative Example 4

A cathode was prepared using a carbon black ("VULCAN XC-72R" available from Cabot Corp.) having an average particle size of 30 m$\mu$m and a DBP oil absorption of 185 cm$^3$/100g, following the same procedures as in Example 4. The porous carbon body of the cathode had a porosity of 82%, and the volume of pores having a pore size of 0.1 to 2 $\mu$m comprised 34% of the total pore volume. Using this cathode, a lithium-thionyl chloride cell as shown in Fig. 5 was assembled following the same procedures as in Example 3.

Comparative Example 5

A cathode was prepared using a carbon black ("ELFTEX 8" available from Cabot Corp.) having an average particle size of 30 m$\mu$m and a DBP oil absorption of 100 cm$^3$/100g, following the same procedures as in Example 3. Using this cathode, a lithium-thionyl chloride cell having the same structure as shown in Fig. 5 was assembled. The porous carbon body of the cathode had a porosity of 84%, and the volume of pores having a pore size of 0.1 to 2 $\mu$m had 24% of the total pore volume.

The cells of Example 3 and Comparative Examples 4 and 5 were examined for the relationship between the discharge current and discharge capacity to end voltage of 2.5 V. The characteristics as shown in Fig. 6 were obtained. Referring to Fig. 6, curve A represents the discharge current vs. discharge capacity characteristics of the cell of Example 3, curve B represents the same of the cell of Comparative Example 4, and curve C represents the same of the cell of Comparative Example 5. As may be seen from Fig. 6, the cell of the present invention (curve A) has substantially an equivalent discharge capacity to that of the conventional cells (curves B and C) in low rate discharge but has an higher discharge capacity in high rate discharge.

## Claims

1. A non-aqueous electrochemical cell comprising an anode consisting of an element selected from lithium, sodium and aluminum; a cathode consisting of a porous carbon body and a current collector; and an electrolyte containing an oxyhalide, wherein the porous carbon body contains a carbon black, characterized in that said carbon black is a mixture of 20 to 80% by weight of acetylene black and 80 to 20% by weight of another carbon black which has a DBP absorption of at least 200 cm$^3$/100 g, and has a thin layer of graphite crystals formed on a surface of each of the other carbon black particles.

2. A cell according to claim 1, characterized in that the anode consists of lithium.

3. A cell according to claim 1, characterized in that the oxyhalide is thionyl chloride.

4. A cell according to claim 1, characterized in that the porous carbon body has a porosity of 70 to 85% and the volume of pores having a pore size of 0.1 to 2 $\mu$m comprises not less than 30% of total pore volume.

## Revendications

1. Pile électrochimique non aqueuse comprenant une anode constituée d'un élément choisi parmi le lithium, le sodium et l'aluminium, une cathode constituée d'un corps de carbone poreux et d'un collecteur de courant, et un électrolyte contenant un oxyhalogénure, dans laquelle le corps de carbone poreux contient du noir de carbone, caractérisée en ce que le noir de carbone est un mélange de 20 à 80 % de noir d'acétylène et de 80 à 20 % en poids d'un autre noir de carbone ayant une absorption DBP d'au moins 200 cm$^3$ par fraction de 100 g, et ayant une mince couche de cristaux de graphite formée à la surface de chacune des particules de l'autre noir de carbone.

2. Pile selon la revendication 1, caractérisée en ce que l'anode est formée de lithium.

3. Pile selon la revendication 1, caractérisée en ce que l'oxyhalogénure est le chlorure de thionyle.

4. Pile selon la revendication 1, caractérisée en ce que le corps de carbone poreux a une porosité comprise entre 70 et 85 % et le volume des pores ayant une dimension comprise entre 0,1 et 2 $\mu$m ne constitue pas moins de 30 % de la porosité totale en volume.

## Patentansprüche

1. Nicht-wäßrige elektrochemische Zelle mit einer Anode aus einem aus Lithium, Natrium oder Aluminium bestehenden Element, einer Kathode aus einem porösen Kohlenstoffkörper und einem Stromsammler und einem ein Oxyhalogenid enthaltenden Elektrolyten, wobei der poröse Kohlenstoffkörper Ruß enthält, dadurch gekennzeichnet, daß es sich bei dem Ruß um ein Gemisch aus 20 - 80 Gew.-% Acetylenruß und 80 - 20 Gew.-% einer anderen Rußsorte mit einer DBP-Absorption von mindestens 200 cm$^3$/100 g handelt und daß auf einer Oberfläche jedes der sonstigen Rußteilchen eine dünne Schicht aus Graphitkristallen gebildet ist.

2. Zelle nach Anspruch 1, dadurch gekennzeichnet, daß die Anode aus Lithium besteht.

3. Zelle nach Anspruch 1, dadurch gekennzeichnet, daß es sich bei dem Oxyhalogenid um Thionylchlorid handelt.

4. Zelle nach Anspruch 1, dadurch gekennzeichnet, daß der poröse Kohlenstoffkörper eine Porosität von 70 - 85% aufweist und daß das Volumen von Poren einer Porengröße von 0,1 - 2 $\mu$m nicht weniger als 30% des gesamten Porenvolumens ausmacht.

FIG. 1

FIG. 2

TERMINAL VOLTAGE (V)

DISCHARGE TIME (Hr)

F I G. 3

F I G. 4

DISCHARGE TIME (Hr)

TERMINAL VOLTAGE (V)

F I G. 5

F I G. 6